# FASCICULE DE BREVET EUROPEEN

(11) **EP 4 634 492 B1**
(45) Date de publication et mention de la délivrance du brevet: **09.09.2026**
(21) Numéro de dépôt: 23841271.2
(22) Date de dépôt: 01.12.2023
(51) Int. Cl.: F01D 25/28, B64C 11/14, F02C 7/04, B64F 5/10, F02K 1/04

(54) **OUTILLAGE DE MANUTENTION D'UN CAPOT D'ENTRÉE DE TURBOMACHINE D'AÉRONEF**
WERKZEUG ZUR HANDHABUNG DES EINLASSKONUS EINER TURBOMASCHINE EINES FLUGZEUGS
TOOLING FOR HANDLING AN AIRCRAFT TURBOMACHINE INLET CONE

(30) Priorité: 16.12.2022 FR 2213523
(43) Date de publication de la demande: 22.10.2025
(73) Titulaire: Safran Nacelles, 76700 Gonfreville-l'Orcher (FR)
(72) Inventeur: LUCIENNE, Vivien, 77550 MOISSY-CRAMAYEL (FR); DEHAIS, Tony, 77550 MOISSY CRAMAYEL (FR); BELLET, Francois, 77550 MOISSY CRAMAYEL (FR)
(74) Mandataire: Casalonga
(86) Numéro de dépôt international: PCT/FR2023/051889
(87) Numéro de publication internationale: WO 2024/126921

(56) Documents cités:
- EP-A2- 1 752 409
- EP-A2- 2 014 878
- CN-U- 208 603 580
- DE-A1- 102019 100 823
- FR-A1- 2 989 733
- US-A1- 2003 147 742
- US-A1- 2012 151 735

## Description

### Domaine technique

La présente invention concerne les capots d'entrée de turbomachines ainsi que les systèmes de manutention de tels capots d'entrée.

En particulier, la présente invention concerne les moyens d'attache et de fixation d'un capot à un système de manutention.

De manière générale, l'invention s'applique à toute pièce industrielle conique nécessitant d'être levée avec un outillage, telle que les capots de turbomachines ou les plugs arrière de tuyères.

### Techniques antérieures

Une turbomachine comprend généralement à l'avant un capot d'entrée présentant une forme générale conique dont l'extrémité peut être arrondie ou non.

Le capot a pour fonction principale de capoter l'avant de l'arbre moteur de la turbomachine tout en guidant le flux d'air vers les pales motrices de la soufflante de ladite turbomachine.

Le capot a pour fonction secondaire de devoir supporter un choc face à un oiseau, ainsi que d'assurer son antigivrage.

Le capot est généralement lourd, de l'ordre de 20kg, de forme conique à base circulaire, par exemple de diamètre d'environ un mètre, et à pointe pouvant être arrondie.

La taille et la masse du capot sont d'autant plus importante pour des applications dans des moteurs ouverts non carénés, où la soufflante a un diamètre généralement plus élevé que pour des moteurs carénés, et où le capot d'entrée est alors également plus massif.

Le capot comprend généralement des branchements, par exemple d'air, électrique ou hydraulique, par exemple pour réaliser sa fonction antigivrage.

Le capot tourne également autour de son axe, notamment à la vitesse des pales de la soufflante.

L'ensemble de ces contraintes de masse et de design impose l'utilisation d'un outillage de manutention adapté, également appelé GSE (« Ground Support Equipment » en termes anglo-saxons). En particulier, le capot doit comprendre une interface facilitant sa manutention et/ou son transport en vue de son installation sur une turbomachine.

Pour le levage et la manutention, il est possible de réaliser des interfaces sur le capot de manière à y fixer ou outillage de manutention. Les interfaces sont généralement positionnées autour du diamètre extérieur du capot. Cependant, il s'agit de la partie du capot avec le plus fort impact aérodynamique, la plus forte inertie et le plus fort impact sur le balourd, le capot étant idéalement le plus équilibré possible.

Le capot doit pouvoir tourner, notamment lors de son installation afin de l'installer dans la bonne position et nécessite donc, dans ce mode de réalisation, d'avoir de nombreuses interfaces de levage, donc plus de masse pouvant déséquilibrer le capot.

CN 208 603 580 U divulgue un outillage de manutention d'un capot de turbomachine d'aéronef avec les caractéristiques du préambule de la revendication 1. EP 2 014 878, US 2012/151735, US 2003/147742, DE 10 2019 100823, EP 1 752 409 et FR 2 989 733 présentent également des outillages de manutention d'un capot de turbomachine.

### Exposé de l'invention

La présente invention a donc pour but de pallier les inconvénients précités et de fournir un outillage de manutention minimisant le nombre de point de contact et s'affranchissant des contraintes de position angulaire du capot.

La présente invention a pour objet un outillage de manutention d'un capot de turbomachine d'aéronef comprenant un axe, un corps et un barreau s'étendant longitudinalement depuis le corps, le barreau étant configuré pour être inséré dans un trou pratiqué le long de l'axe du capot, l'outillage étant configuré pour permettre la rotation du barreau par rapport au corps et autour de l'axe longitudinal dudit barreau.

Ainsi, l'outillage de manutention permet d'effectuer le transport, la maintenance et l'installation du capot de manière plus simple, avec un seul point de fixation, et minimisant les contraintes mécaniques. En particulier, aucune interface de levage n'est nécessaire sur le diamètre extérieur du capot, ce qui participe à un meilleur aérodynamisme et à une absence de balourd sur ledit capot. De plus, cet outillage permet de s'affranchir des contraintes angulaires de préhension d'un capot, la préhension s'effectuant en un seul point central par lequel passe un axe.

Avantageusement, l'outillage comprend un organe de mise en rotation du barreau autour de son axe longitudinal.

Avantageusement, l'outillage comprend un dispositif de mise en rotation du barreau autour d'un deuxième axe, le deuxième axe étant un axe orthogonal à l'axe longitudinal du barreau.

Dans un mode de réalisation, l'outillage comprend un moyen configuré pour freiner et/ou immobiliser en rotation le barreau inséré dans le capot.

Avantageusement, le barreau est fileté.

Dans un mode particulier de réalisation, l'outillage comprend un flasque de répartition d'effort s'étendant radialement depuis une première extrémité du barreau, le flasque étant configuré pour épouser la forme du capot lorsque la seconde extrémité du barreau est insérée dans le trou.

Avantageusement, le flasque comprend des vis de fixation du flasque au capot par l'intermédiaire d'orifices pratiqués dans ledit capot.

Dans un mode particulier de réalisation, l'outillage comprend des poignées de levage.

Dans un mode particulier de réalisation, l'outillage comprend un moyen de levage, par exemple un anneau de levage, configuré pour être accroché à une élingue de levage.

Dans un mode particulier de réalisation, l'outillage comprend un charriot élévateur.

Dans un mode de réalisation, l'outillage comprend un ou plusieurs anneaux et au moins un socle.

L'invention a également pour objet un ensemble comprenant un outillage tel que défini précédemment et un capot de turbomachine d'aéronef maintenu sur l'outillage.

### Brève description des dessins

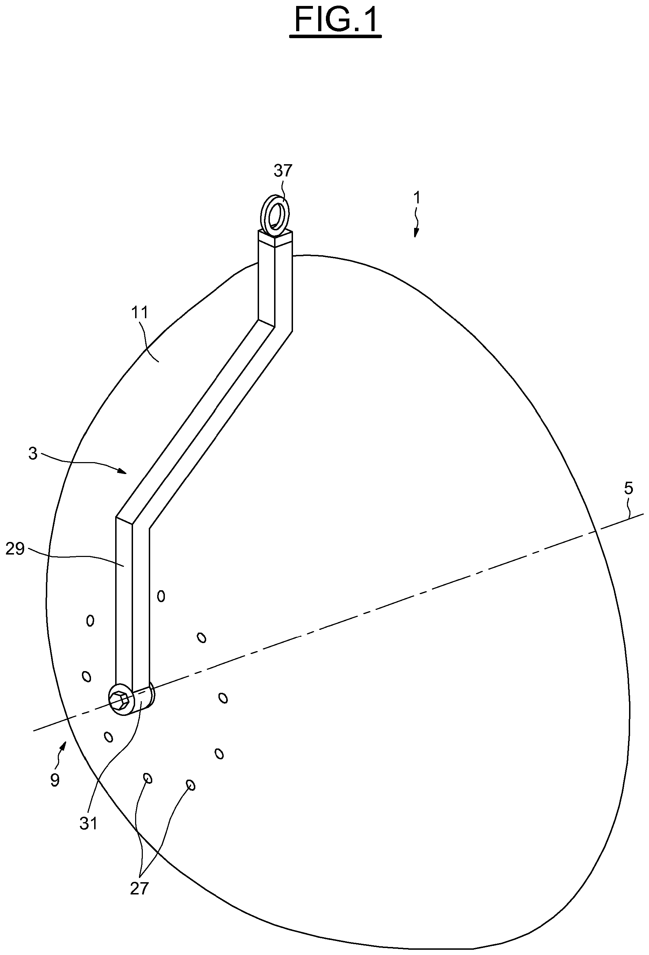

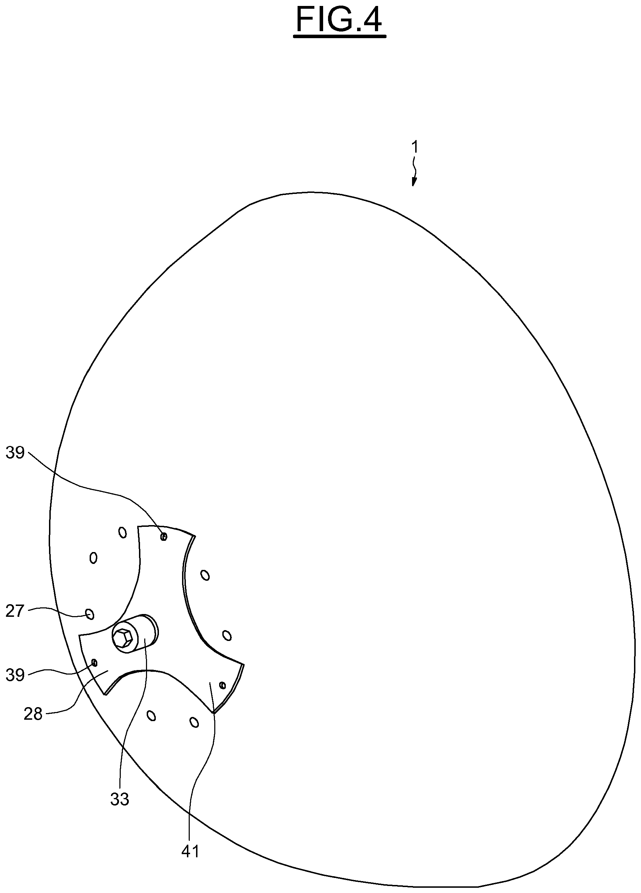

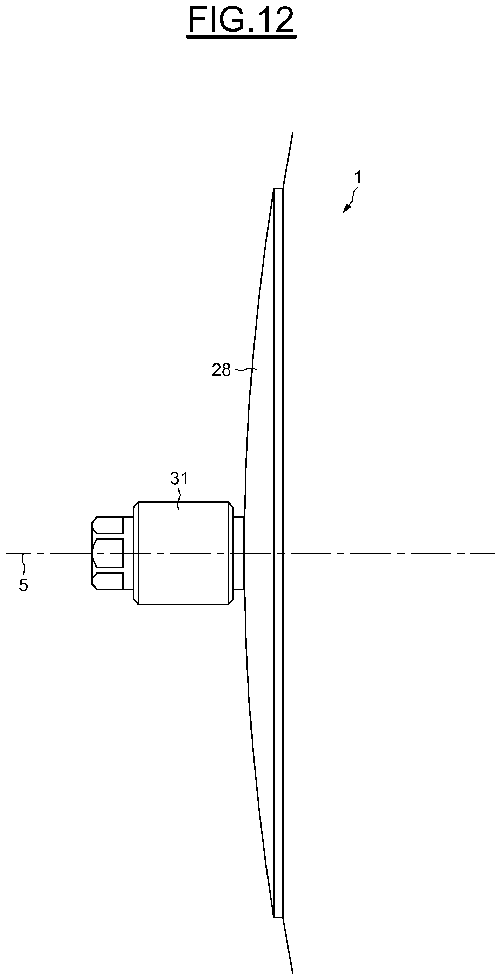

D'autres buts, caractéristiques et avantages de l'invention apparaîtront à la lecture de la description suivante, donnée uniquement à titre d'exemple non limitatif, et faite en référence aux dessins annexés sur lesquels :
[Fig 1]
   est une vue d'un mode de réalisation d'un outillage de manutention d'un capot selon l'invention ;
[Fig 2]
   est une vue en coupe d'un détail de la figure 1 ;
[Fig 3]
   est une vue en coupe d'un ensemble comprenant un capot et un bouchon selon l'invention ;
[Fig 4]
   est une vue d'un mode de réalisation particulier d'un outillage de manutention selon l'invention ;
[Fig 5]
   est une vue d'une variante de la figure 4 ;
[Fig 6]
   est une vue d'un mode de réalisation d'un outillage de manutention selon l'invention adapté au transport d'un capot ;
[Fig 7]
   est une vue d'un mode de réalisation d'un outillage de manutention comprenant des poignées de levage ;
[Fig 8]
   est une vue d'un mode de réalisation d'un outillage de manutention comprenant des poignées de levage et un volant de mise en rotation ;
[Fig 9]
   est une vue d'un mode de réalisation d'un outillage de manutention comprenant un anneau de levage et deux volants de mise en rotation ;
[Fig 10]
   est une vue d'un mode de réalisation d'un outillage de manutention comprenant un charriot élévateur ;
[Fig 11]
   est une vue d'un mode de réalisation d'un capot selon l'invention ;
[Fig 12]
   est une vue d'un détail d'un mode de réalisation d'un outillage de manutention comprenant un flasque maintenu contre le capot selon l'invention ; et
[Fig 13]
   est une vue en coupe de l'outillage illustré sur la figure 12.

### Exposé détaillé d'au moins un mode de réalisation

On a représenté schématiquement sur la figure 1 un mode de réalisation d'une pièce industrielle de révolution 1 ainsi qu'un mode de réalisation d'outillage de manutention 3 configuré pour permettre le levage de ladite pièce industrielle de révolution 1.

On appelle pièce industrielle de révolution toute pièce industrielle comprenant un axe autour duquel la pièce industrielle a une symétrie de révolution. La pièce industrielle est par exemple de forme cylindrique, conique, sphérique, etc...

Dans le mode de réalisation illustré, la pièce industrielle est un capot 1 d'un moteur d'aéronef. Le moteur d'aéronef est par exemple une turbomachine. La turbomachine d'aéronef est par exemple un turboréacteur, notamment à double flux, ou encore un turbopropulseur.

On entend par capot 1 un capot d'entrée, également appelé nez (« nose spinner » en termes anglo-saxons), qui correspond au cône central en amont d'une soufflante de turbomachine. On entend également par capot un plug arrière central d'une tuyère de turbomachine.

Le capot 1 illustré sur la figure 1 est un capot d'entrée d'une turbomachine comprenant un axe 5. En particulier, l'axe 5 est coaxial avec l'axe de la symétrie de révolution et est destiné à être coaxial et relié avec l'axe de la turbomachine.

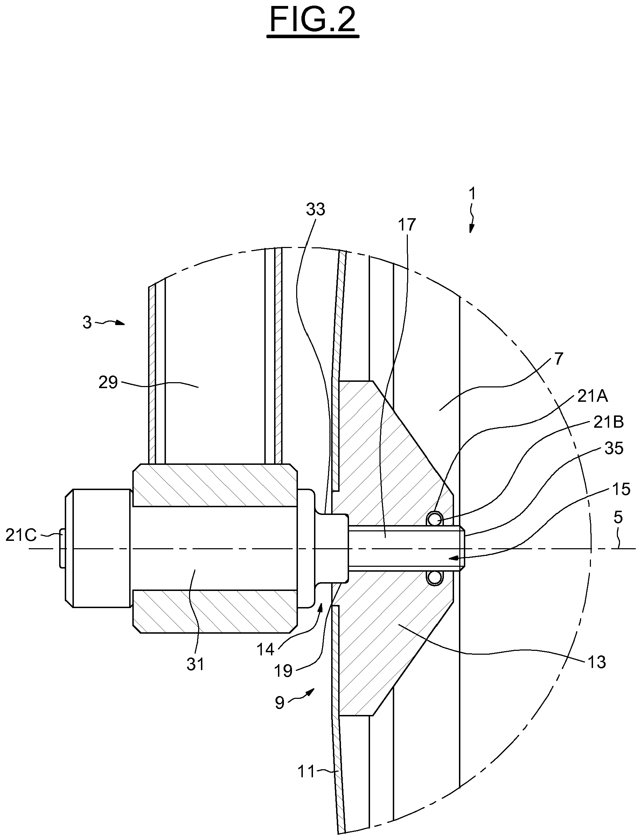

On a représenté sur la figure 2 une vue en coupe d'un détail de la figure 1.

Le capot 1 comprend une armature conique 7 centrée autour de l'axe 5, la pointe 9 conique de l'armature 7 passant par l'axe 5.

On entend par conique toute forme ayant une base circulaire plus large que la pointe 9, la pointe 9 pouvant être aplatie, tel qu'illustré sur la figure 1. On entend donc par conique toute forme de type ogive, cône, dôme, etc...

L'armature conique 7 est réalisée dans un matériau résistant aux conditions de pressions soumises à l'amont d'une turbomachine d'aéronef.

Le capot 1 comprend une peau externe 11 fixée autour de l'armature conique 7, de manière à protéger l'armature 7 et à former un revêtement lisse et aérodynamique.

La peau externe 11 comprend par exemple du carbone et/ou de l'aluminium. La peau externe 11 a une épaisseur comprise entre 1 et 5 millimètres, de préférence de 2 millimètres.

Le capot 1 comprend en outre un élément de révolution 13 fixé à l'armature conique 7 le long de l'axe 5 et contre la peau externe 11. En particulier, l'élément de révolution 13 est positionné au niveau de la pointe conique 9 du capot 1. De plus, en présence de l'élément de révolution 13, la peau externe 11 est fixée sur l'élément de révolution 13.

L'élément de révolution 13 comprend notamment un matériau métallique, notamment de l'aluminium et/ou un matériau composite. Le matériau employé pour l'élément de révolution 13 est robuste et permet la préhension et le levage du capot 1 par l'intermédiaire dudit élément de révolution 13. A cette fin, l'épaisseur de l'élément de révolution 13 est comprise entre 3 et 25 centimètres. La forme de l'élément de révolution 13 peut être modifiée, ce dernier pouvant servir de réserve de matière en vue de l'équilibrage du capot 1.

L'élément de révolution 13, étant donné un positionnement à la pointe 9 du capot 1, permet en outre de représenter un bon référentiel pour d'autres applications, par exemple pour la fabrication du capot 1.

Le capot 1 comprend en outre un trou coaxial avec l'axe 5 et se prolongeant au travers de la peau externe 11 ainsi que dans l'élément de révolution 13. Plus précisément, la peau externe 11 et l'élément de révolution 13 comprennent chacun respectivement un trou 14 et un trou 15. Ces trous 14 et 15 sont alignés l'un avec l'autre et coaxiaux avec l'axe 5. Ainsi, l'outillage de manutention 3, qui comprend un barreau 17, en particulier un barreau 17 d'un diamètre inférieur ou égal à celui des trous 14 et 15, permet la préhension et le levage du capot 1 par l'insertion dudit barreau 17 dans les trous 14 et 15. Le barreau 17 est optionnellement fileté.

L'élément de révolution 13 crée ainsi une interface de manutention. Son positionnement au centre du capot 1 permet un meilleur équilibrage sans balourd et sans nécessité d'une pluralité d'anneaux pour élingue sur la périphérie du capot 1. La manutention est facilitée et les performances aérodynamiques du capot 1 sont améliorées.

Dans un mode particulier de réalisation, le trou 15 traverse entièrement l'élément de révolution 13. Ainsi, un barreau 17 inséré dans le trou 15 peut ressortir de l'autre côté de l'élément de révolution 13 afin, par exemple, de le fixer et de l'empêcher de se désengager.

Les trous 14 et 15 traversant permettent également de pouvoir effectuer des contrôles endoscopiques, ou pour pouvoir introduire des câbles ou des tubes dans le capot 1 par l'intermédiaire des trous 14 et 15, par exemple pour effectuer une installation ou une maintenance d'un dispositif tel qu'un dispositif antigivrage.

Les trous 14 et 15 permet, outre l'insertion d'un outillage de manutention 3, l'insertion d'un outillage de maintien pour le transport du capot.

Dans un mode particulier de réalisation, l'élément de révolution 13 comprend un épaulement annulaire 19. Plus précisément, le trou 15 a un diamètre plus large à la pointe 9 du capot 1, le diamètre du trou 15 se rétrécissant dans l'élément de révolution 13 de manière à former ledit épaulement annulaire 19. L'épaulement 19 permet l'amélioration de la reprise d'efforts de mise en rotation.

Le trou 15 peut optionnellement comprendre un alésage simple, autrement dit comprendre une surface interne lisse, autrement dit non filetée.

En variante, le trou 15 comprend un moyen de blocage longitudinal du barreau 17 selon l'axe 5. Par exemple, le moyen de blocage comprend un filetage sur la surface interne du trou 15. Autrement dit, l'élément de révolution 13 comprend un filetage orienté vers le trou 15.

Le filetage peut ainsi permettre une meilleure fixation d'un barreau 17 fileté dans le trou 15, bien qu'un outillage de manutention 3 avec un barreau 17 non fileté puisse toujours être employé.

Optionnellement, le trou 15 comprend un moyen 21A configuré pour freiner et/ou immobiliser le barreau 17 inséré dans le trou 15. Autrement dit, l'élément de révolution comprend le moyen 21A au niveau du trou 15. Ce moyen 21A permet de garantir le maintien du barreau 17 dans le capot 1 lors de la manutention afin d'éviter tout accident sur le lieu de manutention. Le moyen est par exemple une cavité 21A configurée pour accueillir et bloquer une ou plusieurs billes 21B d'une broche à bille comprise dans le barreau 17 et dont le mouvement radial des billes est activable par un bouton 21C positionné à l'extérieur du trou 15 de manière à être accessible par un opérateur.

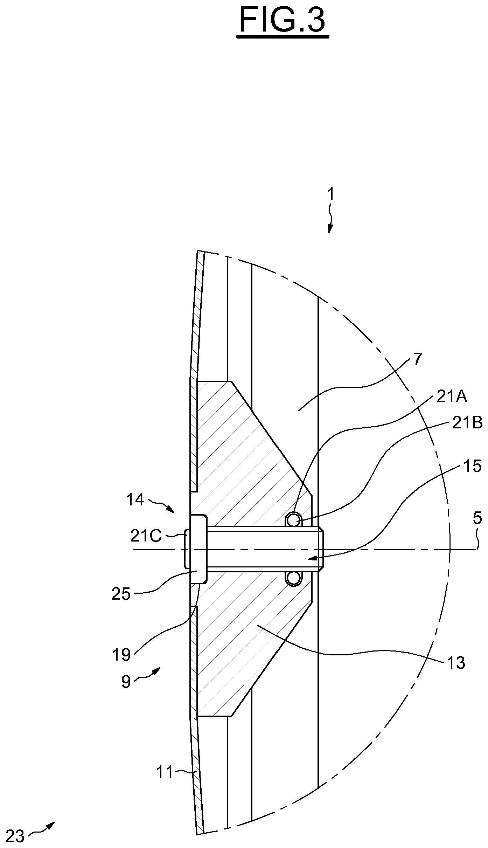

On a représenté sur la figure 3 une vue en coupe d'un détail d'un mode de réalisation d'un ensemble 23 selon l'invention. L'ensemble comprend un capot 1 tel qu'illustré sur les figures 1 et 2, ainsi qu'un bouchon 25 configuré pour boucher le trou 15 lorsque le capot 1 est fixé sur une turbomachine d'aéronef.

En effet, la présence du trou 15 dans le capot 1 peut nuire à l'aérodynamisme de l'aéronef une fois le capot 1 installé sur une turbomachine dudit aéronef. Par ailleurs, lors du vol, de l'air compressé à plus de 600 km/h entrerait dans le capot 1 tandis qu'au sol, des animaux pourraient venir nicher dans le capot 1. Ainsi, l'installation d'un bouchon 25 à l'extrémité du trou 15 est avantageuse. En particulier, le bouchon 25 peut être fileté, tout comme le trou 15, de manière à être vissé dans le trou 15. Le bouchon 25 prend par exemple appui sur l'épaulement 19, le cas échéant.

Dans un mode particulier de réalisation, le sens du filetage du trou 15 est inversé par rapport au sens de rotation pour lequel le capot 1 est conçu, autrement dit par rapport au sens de rotation de la soufflante lorsque le capot 1 est un nez de soufflante. Par exemple, si la turbomachine en fonctionnement pour lequel le capot 1 est destiné tourne dans un premier sens, le filetage du trou 15 doit être orienté dans le sens inverse. Ce mode de réalisation permet d'empêcher le trou 15 de se déboucher seul durant le vol de l'aéronef. Avantageusement, le bouchon 25 est ainsi serré davantage de manière autonome durant le vol.

Dans le mode de réalisation pour lequel le trou 15 comprend un moyen 21A configuré pour freiner et/ou immobiliser le barreau 17 dans le trou 15, ledit moyen 21A peut également permettre d'immobiliser le bouchon 25 lorsque ce dernier est mis en place.

Optionnellement, le capot 1 comprend une pluralité d'orifices 27 réalisés autour du trou 15, les orifices 27 se prolongeant au travers de la peau externe 11 et dans l'élément de révolution 13, par exemple sous la forme de douilles filetées normale à la surface du capot 1. Les orifices 27 permettent l'insertion de vis afin de fixer un flasque 28 de l'outillage de manutention 3 au capot 1 tel qu'illustré sur la figure 4. L'ensemble 23 du capot 1 et du bouchon 25 comprend également une pluralité d'obturateurs (non représentés) permettant de boucher la pluralité d'orifices 27 et d'empêcher l'air d'entrer dans le capot 1.

Le capot 1 est de manière générale configuré pour être utilisé avec l'outillage de manutention 3 décrit ci-après.

Dans le mode de réalisation illustré sur la figure 1, l'outillage de manutention 3 comprend un corps 29 et un barreau 17 tel que le barreau 17 présenté précédemment. Le barreau 17 s'étend selon son axe longitudinal depuis le corps 29 de manière distale. Le barreau 17 est ainsi configuré pour être inséré dans un trou d'un capot tel que le trou 15 décrit précédemment. Par exemple, le corps 29 est relié au barreau 17 par l'intermédiaire d'une liaison pivot 31 telle qu'illustrée sur la figure 2. Le barreau 17 comprend une première extrémité 33 au contact de la liaison pivot 31 ainsi qu'une seconde extrémité 35 destinée à être insérée dans le trou 15. Le barreau 17 est optionnellement fileté.

L'outillage 3 est configuré pour permettre la rotation du barreau 17 par rapport au corps 29 et autour de l'axe longitudinal dudit barreau 17, l'axe longitudinal du barreau 17 étant destiné à être coaxial avec l'axe 5.

Optionnellement, l'outillage 3 comprend un moyen 21B configuré pour freiner et/ou immobiliser en rotation le barreau 17 inséré dans le trou 15. Ce moyen 21B permet de garantir le maintien du barreau 17 dans le capot 1 lors de la manutention afin d'éviter tout accident sur le lieu de manutention. Le moyen est par exemple une ou plusieurs billes 21B d'une broche à bille comprise dans le barreau 17 et dont le mouvement radial des billes est activable par un bouton 21C positionné à l'extérieur du trou 15 de manière à être accessible par un opérateur. Les billes 21B sont configurées pour être accueillies et bloquée dans une cavité 21A du trou 15.

Ainsi, lorsque le barreau 17 est inséré dans le trou 15, le barreau 17 comprenant un épaulement prenant appui sur l'épaulement 19 le cas échéant, il peut permettre de soulever le capot 1 et permet en particulier de pouvoir mettre en rotation le capot 1.

Dans le mode de réalisation illustré sur la figure 1, l'outillage 3 comprend un moyen de levage 37 tel qu'un anneau de levage 37 configuré pour être accroché à une élingue de levage et positionné à la verticale du centre de gravité de l'ensemble comprenant l'outillage 3 et le capot 1.

L'outillage 3 permet ainsi de lever le capot 1, par exemple de manière à l'installer sur une turbomachine d'aéronef, et d'effectuer simultanément les branchements et les vissages nécessaires.

On a représenté sur la figure 4 un mode de réalisation particulier d'un outillage de manutention 3 ainsi qu'un capot 1 tel qu'illustré sur la figure 1.

Sur la figure 4, le corps 29 de l'outillage de manutention 3 n'est pas représenté.

L'outillage 3 comprend un flasque 28 de répartition d'effort s'étendant radialement depuis la première extrémité 33 du barreau 17 et ayant une forme conique, plus précisément complémentaire à la forme du capot 1, en particulier complémentaire de la pointe 9 du cône formé par le capot 1. Le flasque 28 permet ainsi de répartir les efforts de levage et de rotation ailleurs qu'un niveau du barreau 17 et du trou 15 par contact entre le flasque 28 et le capot 1.

Optionnellement, le flasque 28 comprend des vis de fixation 39 du flasque 28 au capot 1. Les vis de fixation 39 s'insèrent par exemple dans les orifices 27 du capot 1. Le flasque 28 comprend par exemple trois lobes 41, chaque lobe 41 comprenant au moins une vis de fixation 39 du flasque 28 au capot 1.

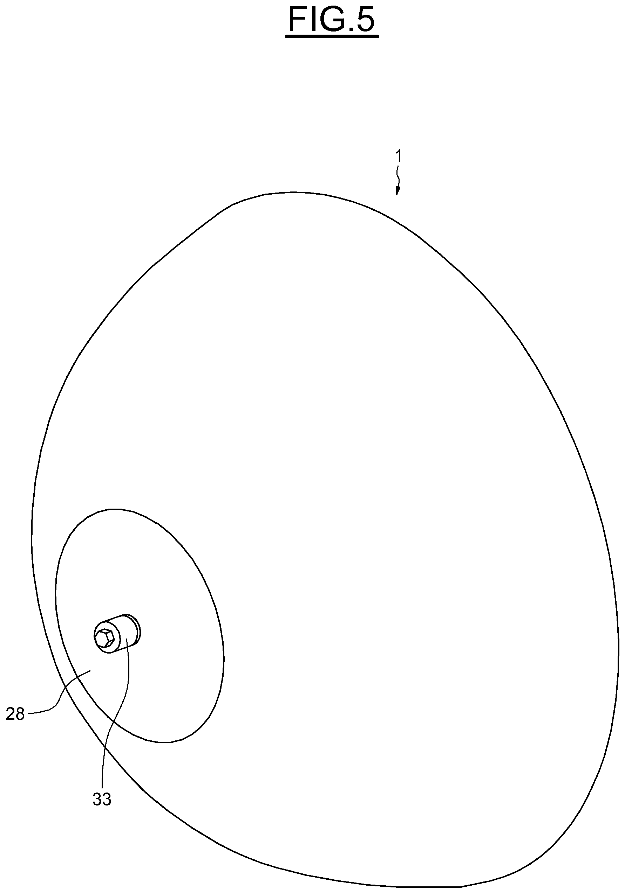

On a représenté sur la figure 5 une variante de la figure 4 dans laquelle le flasque 28 ne comprend pas de vis de fixation 39, seul le contact du flasque 28 avec le capot 1 permettant la répartition d'effort.

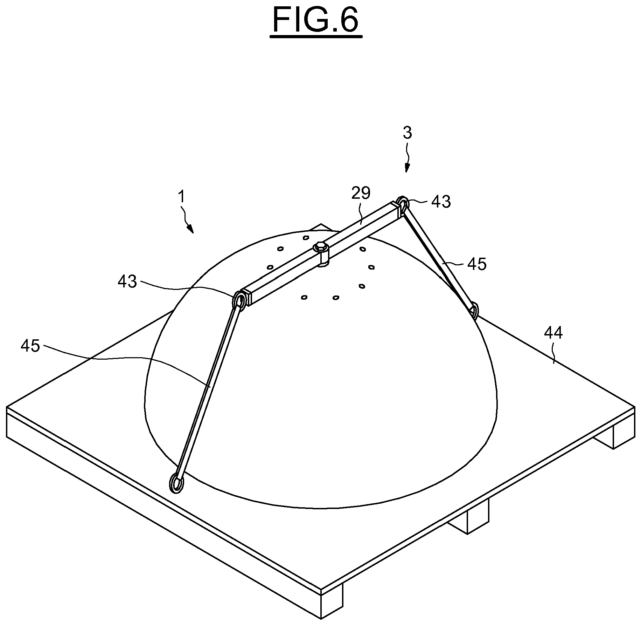

On a représenté sur la figure 6 un mode de réalisation particulier d'un outillage de manutention 3, ainsi qu'un capot 1 selon la figure 1.

Dans ce mode de réalisation, l'outillage de manutention 3 comprend plusieurs anneaux 43, par exemple des anneaux de levage, permettant d'attacher le capot 1 sur un socle 44 et de le transporter aisément, par exemple à l'aide de sangles 45.

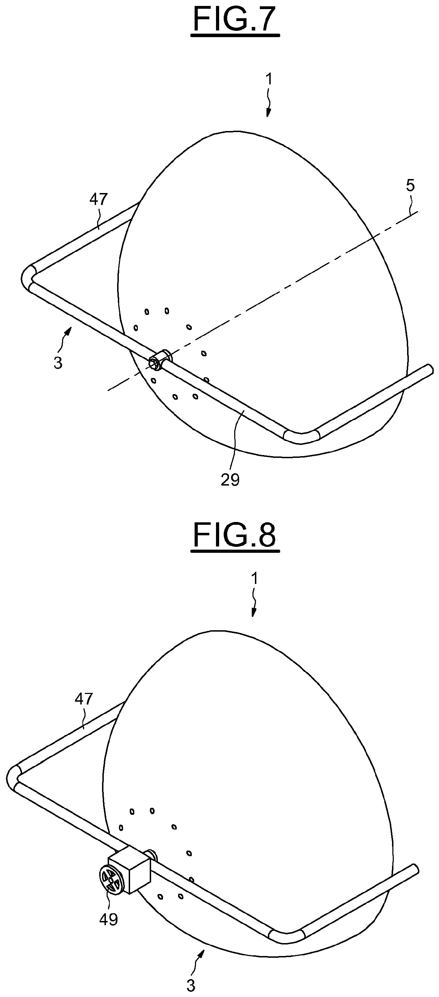

On a représenté sur la figure 7 un mode particulier de réalisation de l'outillage de manutention 3 ainsi qu'un capot 1 similaire à celui de la figure 1.

L'outillage de manutention 3 comprend des poignées de levage 47 préhensibles par un ou plusieurs opérateurs.

Dans ce mode de réalisation, deux opérateurs peuvent soutenir le capot 1 tandis qu'un troisième effectue des opérations d'installation ou de maintenance. Le capot 1 peut être mis en rotation selon son axe 5, par exemple en le tournant à la main.

On a représenté sur la figure 8 une variante du mode de réalisation de la figure 7.

Dans cette variante, l'outillage 3 comprend un organe 49 de mise en rotation du barreau 17 autour de son axe de longitudinal. L'organe 49 facilite ainsi une mise en rotation plus précise. L'organe 49 est par exemple un volant.

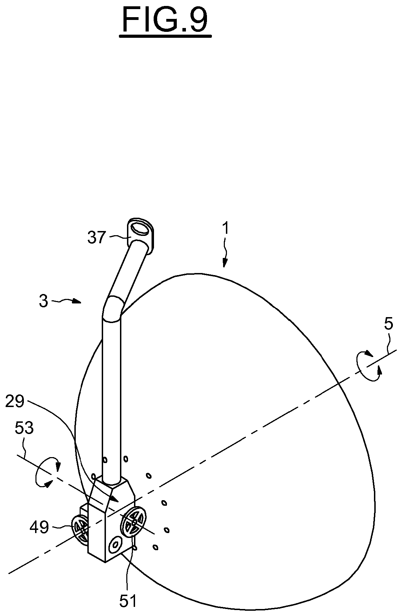

On a représenté sur la figure 9 un autre mode de réalisation d'un outillage de manutention 3 ainsi qu'un capot 1.

Dans ce mode de réalisation, l'outillage 3 comprend un anneau de levage 37 positionné à la verticale du centre de gravité de l'ensemble comprenant l'outillage 3 et le capot 1, un organe 49 de mise en rotation du barreau 17 autour de son axe longitudinal, destiné à être coaxial avec l'axe 5, ainsi qu'un dispositif 51 de mise en rotation du barreau 17 autour d'un deuxième axe 53 orthogonal à l'axe longitudinal du barreau 17. Le deuxième axe 53 est notamment horizontal lorsque le capot lest en position pour être installé sur la turbomachine.

Le dispositif 51 est par exemple un volant. Il permet en particulier de passer le capot 1 d'une position de transport telle qu'illustrée sur la figure 6 à une position d'installation telle qu'illustrée sur la figure 9.

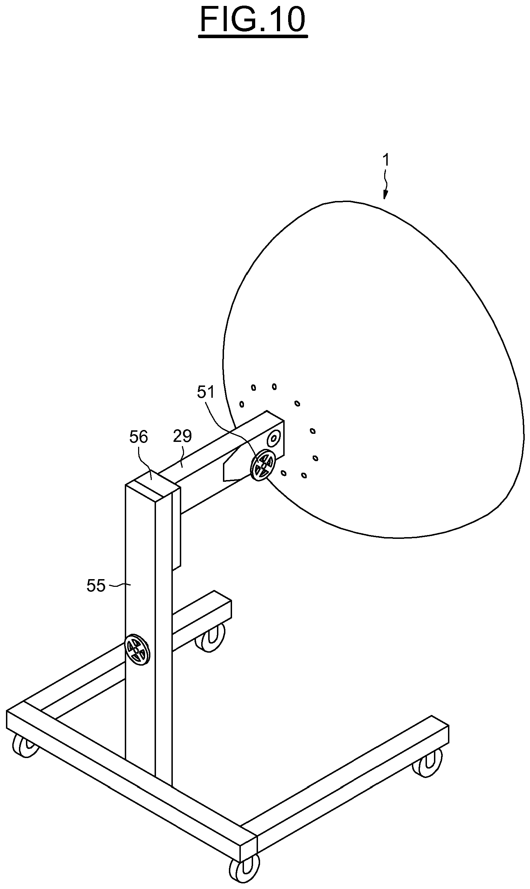

On a représenté sur la figure 10 un autre mode de réalisation de l'outillage de manutention 3.

Dans ce mode de réalisation, l'outillage de manutention 3 comprend un charriot élévateur 55 relié au corps 29 et permettant de soutenir le corps 29. Le charriot élévateur 55 comprend un moyen 56 de réglage de la hauteur du corps, par exemple à l'aide d'une manivelle ou d'un volant, en vue de l'installation ou de la maintenance du capot 1 sur la turbomachine par exemple. Le charriot élévateur 55 comprend par exemple des roulettes lui permettant d'être mobile.

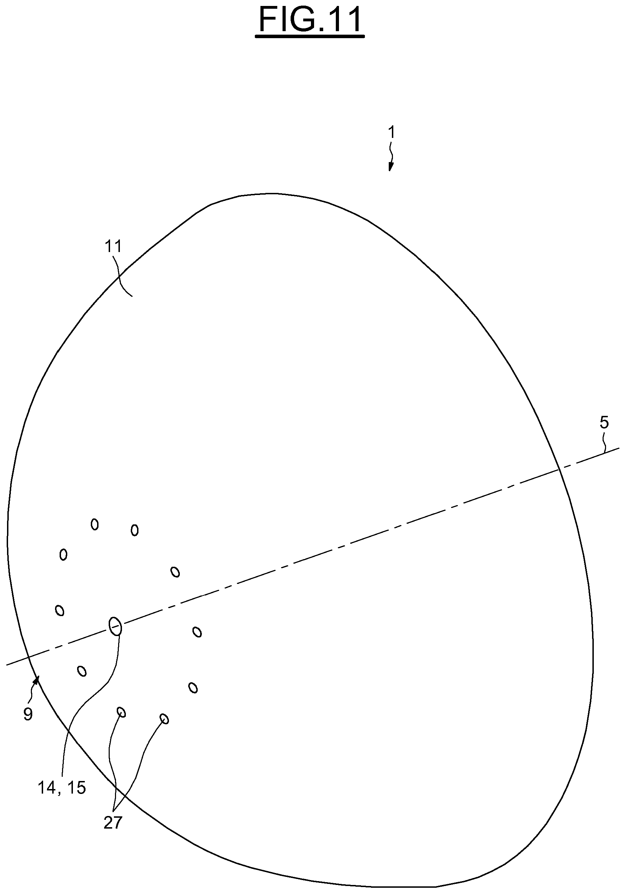

A des fins de clarification, on a représenté sur la figure 11 un capot 1 seul. Dans le mode de réalisation représenté, les trous 14 et 15 respectivement formés dans la peau externe 11 et l'élément de révolution 13 sont illustrés. De plus, le capot 1 comprend une pluralité d'orifices pour la fixation d'un flasque 28.

On a également représenté sur la figure 12 une vue d'un détail d'un outillage de manutention 3. Le détail illustre la liaison pivot 31 ainsi que le flasque 28 maintenue sur le capot 1.

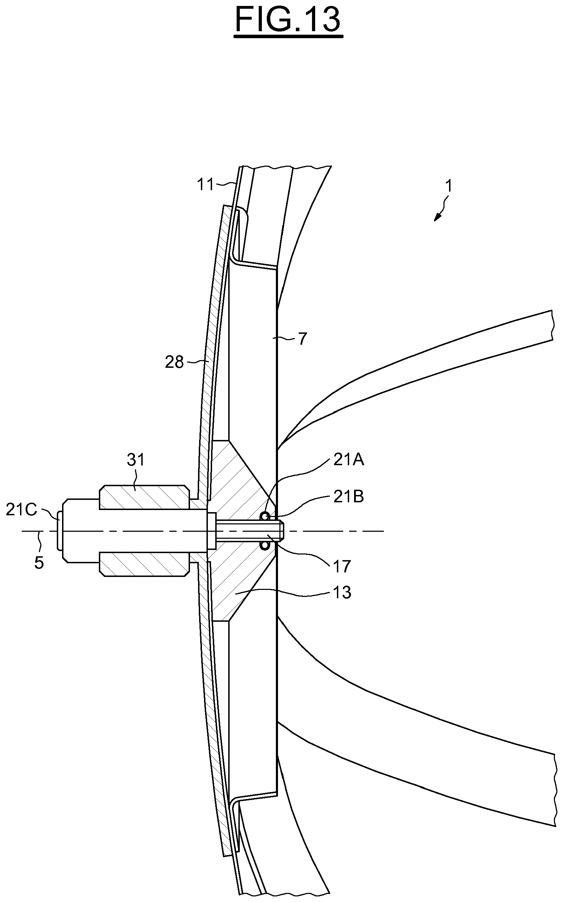

La figure 13 est une vue en coupe du mode de réalisation illustré sur la figure 12 et illustre une liaison pivot 31 au bout de laquelle est positionné le barreau 17, par exemple venu de matière avec le flasque 28.

Tous les modes de réalisations précédemment décrits sont compatibles entre eux. En particulier, l'outillage 3 peut comprendre à la fois des poignées de levage 47, un anneau de levage 37 ainsi qu'un charriot élévateur 55, tout comme l'un et/ou l'autre des organe et dispositif 49 et 51.

## Revendications

1. Outillage de manutention (3) d'un capot de turbomachine d'aéronef (1), comprenant un axe (5), l'outillage (3) comprenant
un corps (29) et un barreau (17) s'étendant longitudinalement depuis le corps (29), l'outillage (3) étant configuré pour permettre la rotation du barreau (17) par rapport au corps (29) et autour de l'axe longitudinal dudit barreau (17), **caractérisé en ce que**
le barreau (17) est configuré pour être inséré dans un trou (15) pratiqué le long de l'axe (5) du capot (1).

2. Outillage (3) selon la revendication 1, comprenant un organe (49) de mise en rotation du barreau (17) autour de son axe longitudinal.

3. Outillage (3) selon l'une des revendications 1 et 2, comprenant un dispositif (51) de mise en rotation du barreau (17) autour d'un deuxième axe (53), le deuxième axe (53) étant un axe orthogonal à l'axe longitudinal du barreau (17).

4. Outillage (3) selon l'une quelconque des revendications 1 à 3, dans lequel le barreau (17) est fileté.

5. Outillage (3) selon l'une quelconque des revendications 1 à 4, comprenant un flasque (28) de répartition d'effort s'étendant radialement depuis une première extrémité (33) du barreau (17) le flasque (28) étant configuré pour épouser la forme du capot (1) lorsque la seconde extrémité (35) du barreau (17) est insérée dans le trou (15).

6. Outillage (3) selon la revendication 5, dans lequel le flasque (28) comprend des vis de fixation (39) du flasque (28) au capot (1) par l'intermédiaire d'orifices pratiqués dans ledit capot (1).

7. Outillage (3) selon l'une quelconque des revendications 1 à 6, comprenant des poignées de levage (47).

8. Outillage (3) selon l'une quelconque des revendications 1 à 7, comprenant un moyen de levage (37), par exemple un anneau de levage, configuré pour être accroché à une élingue de levage.

9. Outillage (3) selon l'une quelconque des revendications 1 à 8, comprenant un ou plusieurs anneaux (43) et au moins une sangle (45) configurés pour attacher le capot (1) sur un socle (44).

10. Ensemble comprenant un outillage (3) selon l'une quelconque des revendications 1 à 9 et un capot (1) de turbomachine d'aéronef maintenu sur l'outillage (3).

## Patentansprüche

1. Handhabungswerkzeug (3) für eine Turbomaschinenhaube eines Luftfahrzeugs (1), umfassend eine Achse (5), wobei das Werkzeug (3) einen Körper (29) und eine Stange (17) umfasst, die sich längs vom Körper (29) erstrecken, wobei das Werkzeug (3) so eingerichtet ist, dass es die Drehung der Stange (17) in Bezug auf den Körper (29) und um die Längsachse der Stange (17) herum ermöglicht, **dadurch gekennzeichnet, dass**
die Stange (17) so eingerichtet ist, dass sie in ein Loch (15) eingeführt werden kann, das entlang der Achse (5) der Haube (1) ausgebildet ist.

2. Werkzeug (3) nach Anspruch 1, das ein Element (49) zum Drehen der Stange (17) um ihre Längsachse herum umfasst.

3. Werkzeug (3) nach einem der Ansprüche 1 und 2, das eine Vorrichtung (51) zum Drehen der Stange (17) um eine zweite Achse (53) herum umfasst, wobei die zweite Achse (53) eine Achse orthogonal zur Längsachse der Stange (17) ist.

4. Werkzeug (3) nach einem der Ansprüche 1 bis 3, wobei die Stange (17) mit einem Gewinde versehen ist.

5. Werkzeug (3) nach einem der Ansprüche 1 bis 4, das einen Kraftverteilungsflansch (28) umfasst, der sich radial von einem ersten Ende (33) der Stange (17) erstreckt, wobei der Flansch (28) so eingerichtet ist, dass er die Form der Haube (1) annimmt, wenn das zweite Ende (35) der Stange (17) in das Loch (15) eingeführt wird.

6. Werkzeug (3) nach Anspruch 5, wobei der Flansch (28) Schrauben (39) zum Befestigen des Flansches (28) an der Haube (1) durch Öffnungen in der Haube (1) umfasst.

7. Werkzeug (3) nach einem der Ansprüche 1 bis 6, das Hebegriffe (47) umfasst.

8. Werkzeug (3) nach einem der Ansprüche 1 bis 7, das ein Hebemittel (37), beispielsweise eine Hebeöse, umfasst, das so eingerichtet ist, dass es an einer Hebeschlinge eingehängt werden kann.

9. Werkzeug (3) nach einem der Ansprüche 1 bis 8, das eine oder mehrere Ösen (43) und mindestens einen Gurt (45) umfasst, die so eingerichtet sind, dass sie die Haube (1) auf einem Sockel (44) befestigen.

10. Baugruppe, die ein Werkzeug (3) nach einem der Ansprüche 1 bis 9 und eine an dem Werkzeug (3) gehaltene Haube (1) für eine Turbomaschine eines Luftfahrzeugs umfasst.

## Claims

1. Tool (3) for handling an aircraft turbomachine cowl (1), comprising an axis (5), the tool (3) comprising a body (29) and a bar (17) extending longitudinally from the body (29), the tool (3) being configured to allow the rotation of the bar (17) relative to the body (29) and about the longitudinal axis of said bar (17), **characterised in that**
the bar (17) is configured to be inserted into a hole (15) made along the axis (5) of the cowl (1).

2. Tool (3) according to claim 1, comprising a member (49) for rotating the bar (17) about its longitudinal axis.

3. Tool (3) according to either claim 1 or 2, comprising a device (51) for rotating the bar (17) about a second axis (53), the second axis (53) being an axis orthogonal to the longitudinal axis of the bar (17).

4. Tool (3) according to any one of claims 1 to 3, wherein the bar (17) is threaded.

5. Tool (3) according to any one of claims 1 to 4, comprising a force distribution flange (28) radially extending from a first end (33) of the bar (17), the flange (28) being configured to conform to the shape of the cowl (1) when the second end (35) of the bar (17) is inserted into the hole (15).

6. Tool (3) according to claim 5, wherein the flange (28) comprises screws (39) for fastening the flange (28) to the cowl (1) via holes made in said cowl (1).

7. Tool (3) according to any one of claims 1 to 6, comprising hoisting handles (47).

8. Tool (3) according to any one of claims 1 to 7, comprising a hoisting means (37), for example a hoisting ring, configured to be hooked to a hoisting sling.

9. Tool (3) according to any one of claims 1 to 8, comprising one or more rings (43) and at least one strap (45) configured to attach the cowl (1) to a base (44).

10. Assembly comprising a tool (3) according to any one of claims 1 to 9 and an aircraft turbomachine cowl (1) held on the tool (3).
